# EUROPEAN PATENT APPLICATION

(11) **EP 4 311 867 A1**
(43) Date of publication of application: **31.01.2024**
(21) Application number: 22186624.7
(22) Date of filing: 25.07.2022
(51) Int. Cl.: C25B 1/02, C25B 1/04, C25B 1/24, C25B 9/23, C25B 13/08, C25B 15/08, C01B 17/74, B01D 53/46, B01D 53/96

(54) **PROCESS AND PLANT FOR PRODUCING HYDROGEN USING HYDROGEN BROMIDE ELECTROLYSIS**

(71) Applicant: Sulzer Management AG, 8401 Winterthur (CH)
(72) Inventor: NESTERENKO, Nikolay, 8400 Winterthur (CH); SANTOS, Miguel Alexandre Figueiredo, Sugar Land, Texas 77479 (US); ZHOU, Jingsong, Houston, Texas 77056 (US)
(74) Representative: Henkel & Partner mbB

(57) **Abstract**

A process for producing hydrogen comprises the following steps:
a) providing a starting mixture containing bromine, water and a sulfur containing compound,
b) reacting the starting mixture provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions, wherein at least one hydrogen bromide enriched composition contains at most 1,000 ppm of sulfuric acid,
d) subjecting at least a portion of the at least one hydrogen bromide enriched composition containing at most 1,000 ppm of sulfuric acid obtained in step c) to an electrolysis so as to obtain hydrogen and a bromine containing composition, and
e) recycling at least a portion of the bromine containing composition obtained in step d) back to step a).

## Description

The present invention relates to a process and to a plant for producing hydrogen using hydrogen bromide electrolysis.

Hydrogen is an ecological sustainable energy source, because it produces only water, when used as energy source of a fuel cell or if burned with oxygen. Moreover, hydrogen may be produced from non-fossil raw materials using renewable energy, such as by electrolysis of water using electrical power having been produced by solar energy. Hydrogen produced with such or a similar process is called on account of its environmental friendliness green hydrogen. On account of the above-mentioned reasons, it is expected that the global demand for hydrogen and hydrogen-derived fuels will significantly increase in the coming years, particularly because it is expected that hydrogen will play a key role in mitigating the global warming.

Several technologies for producing hydrogen by electrolysis of water are known, such as alkaline electrolysis, proton exchange membrane electrolysis and solid oxide electrolysis. The different electrolysis technologies have different operation ranges and different efficiencies. While solid oxide electrolysis is for example a high temperature solution that typically offers comparably high efficiencies, this technique has drastic drawbacks, such as having a limited lifetime and requiring relatively high capital expenditures in combination with generally lower technology readiness levels. Alkaline electrolysis does not allow for regulation of power over a comparably broad range and furthermore suffers from disadvantageously low current densities, which in turn increase the capital expenditures. In contrast thereto, proton exchange membrane electrolysis can be typically operated at higher current densities, which reduces the capital expenditures. Moreover, proton exchange membrane electrolysis is much more flexible than other water electrolysis techniques, such as in particular alkaline electrolysis. In view of this, proton exchange membrane electrolysis is generally favored for water electrolysis in order to produce green hydrogen.

However, water electrolysis requires a significant amount of energy. Therefore, alternative electrolysis routes to produce hydrogen would be desirable, such as the electrolysis of a hydrogen halogenide, such as of hydrogen fluoride, hydrogen chloride or hydrogen bromide. On an industrial level, the only relevant practical application of hydrogen bromide electrolysis is its use in flow batteries with the objective to store energy. Such flow batteries do, however, neither produce hydrogen nor bromine for subsequent use thereof, but these compounds are rather used as energy carriers and are often even conserved in an impurified form which is sufficient for storage but is regularly not sufficiently pure for a subsequent use of the hydrogen. Furthermore, in flow batteries the electrolysis is regularly performed under mild conditions in liquid phase to avoid pressure increase and/or damage of the membrane and often runs at a limited conversion level to avoid formation of several phases and any inhomogeneity in the system. Hydrogen bromide electrolysis is also described for other purposes, such as in processes for converting biowaste into useable energy components, for desulfurizing flue gas, for removing hydrogen sulfide from exhaust gases or the like. Even if in these processes' hydrogen is produced as by-product, these processes are not suitable to produce pure hydrogen in an industrial scale at a commercially acceptable price using a plant with reasonable low capital expenditures.

In view of this, the object underlying the present invention is to provide a process for producing hydrogen from water in an industrial scale, wherein the process leads with lower energy demand in comparison to the water electrolysis processes described in the prior art to pure hydrogen and is characterized by low production costs.

In accordance with the present invention, this object is solved by providing a process for producing hydrogen comprising the following steps:
a) providing a starting mixture containing bromine, water and a sulfur containing compound,
b) reacting the starting mixture provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions, wherein at least one hydrogen bromide enriched composition contains at most 1,000 ppm of sulfuric acid,
d) subjecting at least a portion of the at least one hydrogen bromide enriched composition containing at most 1,000 ppm of sulfuric acid obtained in step c) to an electrolysis so as to obtain hydrogen and a bromine containing composition, and
e) recycling at least a portion of the bromine containing composition obtained in step d) back to step a).

This process does not only allow to produce pure hydrogen in an industrial scale, but also to produce pure hydrogen with reasonable low operational costs and with reasonable low capital expenditures. The reaction of bromine, water and sulfur containing compounds, such as elemental sulfur, to sulfuric acid and hydrogen bromide in step b) is exothermic and the energy won thereby may be used for significantly reducing the required amount of external energy for the water splitting involving the electrolysis of hydrogen bromide performed in step d). In addition, the separation step c) separating the reaction mixture effluent, which contains hydrogen bromide and sulfuric acid typically together with unreacted water and bromine and other impurities resulting from the source of the sulfur containing compound, into one or more hydrogen bromide enriched compositions and into one or more sulfuric acid enriched compositions, wherein at least one hydrogen bromide enriched composition contains at most 1,000 ppm and most preferably at most 10 ppm of sulfuric acid, allows to subject such a sulfuric acid-depleted hydrogen bromide composition to the electrolysis in step d) that the electrolysis cell and in particular the membrane and the electrodes are reliably protected against deterioration, thus leading to a long lifetime of the electrolysis cell. Such a deterioration of the electrolysis cell may be caused by the presence of sulfuric acid and also of products of the transformation of sulfuric acid in the electrolysis cell, e.g. the transformation to elemental sulfur. Those products, such as e.g. elemental sulfur, can be also present due to non-complete oxidation of S-species in the reaction mixture effluent in step b). Often, the reaction of a S-containing compound may result in presence of some impurities of individual sulfur in step b), which are highly undesirable. Therefore, the separation in step c) to reduce dramatically the concentration of sulfuric acid in the HBr stream is important to protect the performance of the electrolysis cell.

Furthermore, the generation of the one or more sulfuric acid enriched compositions in step c) allows to produce in an easy and cost-efficient manner very pure sulfuric acid having a sulfuric acid concentration of up to 95% by weight, which may be commercially sold and thus further reduces the total costs of the process in accordance with the present invention. Moreover, the separation of the reaction mixture effluent containing hydrogen bromide and sulfuric acid typically together with unreacted water and bromine and other impurities resulting from the source of the sulfur containing compound into one or more hydrogen bromide enriched compositions and into one or more sulfuric acid enriched compositions concentrates the water in the one or more sulfuric acid enriched compositions and thus allows to easily remove pure and in particular hydrogen bromide-free water from the one or more sulfuric acid enriched compositions. This pure and in particular hydrogen bromide-free water may be easily purged from the process due to its purity, thus reliably and efficiently allowing to avoid water accumulation in the continuous process. Moreover, the separation of the reaction mixture effluent into one or more hydrogen bromide enriched compositions and into one or more sulfuric acid enriched compositions allows to recycle a portion of the one or more hydrogen bromide enriched compositions back into the starting mixture, such assuring in a simple and efficient manner that the starting mixture is a single-phase liquid mixture comprising enough hydrogen bromide so that a separation of bromide and water into two phases is reliably avoided in the reaction mixture. In addition, the generation of one or more sulfuric acid enriched compositions allows by simply recycling a portion of the one or more sulfuric acid enriched compositions to the liquid part of the reaction mixture obtained in step b) to adjust a sufficiently high amount of sulfuric acid in the mixture, which breaks the hydrogen bromide-water azeotrope in the mixture. This allows to easily and efficiently separate by a subsequent distillation step a gaseous hydrogen bromide enriched composition having a comparable low water content from a liquid sulfuric acid- and water-enriched composition so that the gaseous hydrogen bromide enriched composition may be used directly in the electrolysis of step d). Such a gaseous electrolysis is more energy efficient than an electrolysis with an aqueous solution, in which hydrogen bromide is dissolved in water. All in all, the process in accordance with the present invention allows to produce hydrogen in an industrial scale, wherein the process leads with lower energy demand to pure hydrogen in comparison to the water electrolysis processes described in the prior art to pure hydrogen and is characterized by low production costs.

In principle, the present invention is not particularly limited concerning the kind of sulfur containing compound used in step a), as long as it may react with bromine and optionally water to sulfuric acid. Therefore, it is not important, whether the sulfur containing compound is reacted in step b) to sulfuric acid by oxidizing the sulfur atom, by reducing the sulfur atom or by not changing the oxidation state of the sulfur atom. According to one alternative, the sulfur containing compound used in step a) is oxidizable to sulfuric acid. Good results are in particular obtained, when the sulfur containing compound is selected from the group consisting of sulfur, sulfides, disulfides, thiophenes, thiols and arbitrary combinations of two or more of the aforementioned compounds. More preferably the sulfur containing compound is selected from the group consisting of hydrogen sulfide, sulfur, sulfur dioxide, carbon disulfide, carbonyl sulfide, methanethiol and arbitrary combinations of two or more of the aforementioned compounds. A particularly preferred example for the sulfur containing compound is hydrogen sulfide and/or elemental sulfur.

Exemplarily, the reaction of some of the above-mentioned sulfur containing compounds with bromine and water are shown:

H₂S + 4 Br₂ + 4 H₂O → 8 HBr + H₂SO₄

S + 3 Br₂ + 4 H₂O → 6 HBr + H₂SO₄

SO₂ + Br₂ + 2 H₂O → 2 HBr + H₂SO₄

CS₂ + 4 Br₂ + 10 H₂O → 8 HBr + 2 H₂SO₄ + CO₂

2 COS + 4 Br₂ + 10 H₂O → 8 HBr + 2 H₂SO₄ +2CO₂

In accordance with the present invention, the starting mixture provided in step a) contains bromine, water and a sulfur containing compound. Of course, the presence of further compounds is not excluded. On the contrary, it is preferred that the starting mixture provided in step a) additionally contains hydrogen bromide. This is preferred, in order to enable in step b) a single-phase liquid reaction mixture. Binary systems of bromine and water are - except for very low bromine contents - two-phase systems, whereas ternary mixtures of bromine, water and hydrogen bromine are above a certain hydrogen bromide concentration (of for example 5% by weight), which depends on the relative amounts of bromine and water, single-phase liquid mixtures. At and above a hydrogen bromide concentration of 11% by weight, all ternary mixtures of bromine, hydrogen bromide and water are single-phase liquid mixtures. Therefore, it is preferred that the starting mixture a) contains a respectfully high amount of hydrogen bromide.

More specifically, it is preferred that the starting mixture contains at least 5% by weight and more preferably 11 to 46% by weight of hydrogen bromide based on the total weight of bromine, hydrogen bromide and water in the liquid phase of the starting mixture, if the starting mixture is at the reaction temperature and reaction pressure of step b) a gas-liquid mixture. If the starting mixture is at the reaction temperature and reaction pressure of step b) a liquid, it is preferred that the starting mixture contains at least 5% by weight and preferably 11 to 46% by weight of hydrogen bromide based on the total weight of bromine, hydrogen bromide and water in the starting mixture. The 5% by weight concentration of hydrogen bromide leads to a single-phase liquid mixture at least for low and high amounts of bromine in relation to that of water. However, as set out above a hydrogen bromide concentration of at least 11% by weight leads for every amount of bromine in relation to that of water to a single-phase liquid mixture.

Preferably, the starting mixture comprises at least 5% by weight and preferably 11 to 46% by weight of hydrogen bromide, at least 1% by weight and preferably 2 to 35% by weight of bromine and 40 to 75% by weight of water based on the total weight of water, bromine and hydrogen bromide in the liquid phase of the starting mixture, if the starting mixture is at the reaction temperature and reaction pressure a gas-liquid mixture. If the starting mixture is at the reaction temperature and reaction pressure a liquid, it is preferred that the starting mixture comprises at least 5% by weight and preferably 11 to 46% by weight of hydrogen bromide, at least 1% by weight and preferably 2 to 35% by weight of bromine and 30 to 75% by weight of water based on the total weight of bromine, hydrogen bromide and water in the starting mixture.

In order to effect the hydrogen bromide addition into the starting mixture in an easy and cost-efficient manner, it is suggested in a further development of the idea of the present invention that the process in accordance with the present invention further comprises as step f) a recycling of at least a portion of hydrogen bromide contained in one of the one or more hydrogen bromide enriched compositions produced in step c) to step a), wherein the recycled hydrogen bromide has not been subjected to electrolysis. Thereby, the supply of external hydrogen bromide to the starting mixture in step a) is not required, thus further decreasing the total costs of the process and effecting a particular efficient utilization of the hydrogen bromide formed in the reaction of step b). A further advantage of using recycled hydrogen bromide being not subjected to the electrolysis in step d) in the starting mixture, i.e. by using recycled hydrogen bromide which has bypassed the electrolysis of step d) in the starting mixture, is that only a part of the hydrogen bromide being obtained in step b) needs to be sent to the electrolysis of step d) for the production of bromine and that for the case of an aqueous hydrogen bromide electrolysis an addition of more water to the electrolysis of step d) is avoided, which both leads to significant energy savings of the process.

At standard pressure and temperature conditions, hydrogen bromide forms a mixture of azeotropic composition with water. At those conditions the relative amount of hydrogen bromide relative to the hydrogen bromide-water mixture is about 47% by weight. An important aspect of the process in accordance with the present invention is the ability to adjust the hydrogen bromide-water azeotrope composition or to break the azeotrope completely, if desired and depending on the embodiment. For this purpose, increasing amounts of sulfuric acid can be added to the hydrogen bromide-water mixture, which has the progressive effect of firstly reducing the hydrogen bromide fraction in the azeotropic composition, and finally breaking the azeotrope completely, which happens when the amount of sulfuric relative to the sum of hydrogen bromide and water is about 55% by weight.

Another important aspect of the present invention is that the optimum operating point for any embodiment may be the presence of a hydrogen bromide at nearazeotropic composition relative to hydrogen bromide and water in the liquid portion at the outlet of the reaction section. The reason for this is twofold: on the one hand, if hydrogen bromide is present at concentrations above the azeotropic composition in the reaction mixture effluent, then excessive hydrogen bromide may also be contained in the gas portion of the reactor mixture effluent, and potentially it may not only compromise the operation of the subsequent gas scrubber column being described further below, but can also result in insufficient hydrogen bromide leftover in the liquid portion of the reaction mixture effluent, in which case there will be insufficient hydrogen bromide conversion to bromine in electrolysis (or other hydrogen bromide conversion method). On the other hand, if hydrogen bromide is present at concentrations below the azeotropic composition in the reactor mixture effluent, then this means that there is excessive water present, which means additional energy to be spent for evaporating this water in the subsequent hydrogen bromide recovery and sulfuric acid purification steps. Furthermore, this may also result in a sub-azeotropic hydrogen bromide solution into electrolysis, which is inefficient. The optimum point can be thus targeted by controlling the amount of additional water into the gas scrubber as described further below.

As set out above, it is particularly preferred in the present invention to use in step a) elemental sulfur and/or hydrogen sulfide as sulfur containing compound. Therefore, it is preferred that in step a) elemental sulfur (or any sulfur containing compound) is mixed with the bromine, water and optional hydrogen bromide. In this embodiment, the concentration of sulfur in the starting mixture provided in step a) is preferably higher than 0.05% by weight, more preferably 0.05 to 40% by weight and most preferably 0.1 to 2% by weight, based on the total weight of the liquid phase of the starting mixture, if the starting mixture is at the reaction temperature and reaction pressure a gas-liquid mixture, and based on the total weight of the starting mixture, if the starting mixture is at the reaction temperature and reaction pressure a liquid.

However, in accordance with an alternative preferred embodiment of the present invention it is preferred to use in step a) as source for the sulfur containing compound a gas, which contains a sulfur containing compound as impurity, in order to desulfurize the gas simultaneously to the production of hydrogen. Therefore, it is suggested in this alternative preferred embodiment of the present invention to mix in step a) a gas, which contains a sulfur containing compound, with the bromine, water and, optionally and preferred also hydrogen bromide, wherein the gas, which contains a sulfur containing compound, is selected from the group consisting of biogases, natural gases, flue gases, combustion gases from sulfur compounds, tail gases and arbitrary combinations of two or more of the aforementioned gases. The concentration of the sulfur containing compound in the gas may be between 10 ppm to 99% by weight and more preferably 1 to 40% by weight, based on the total weight of the gas. It is further preferred in this embodiment that the gas, which contains the sulfur containing compound, contains less than 500 ppm by volume, more preferably less than 200 ppm by volume, even more preferably less than 100 ppm by volume and most preferably none of unsaturated compounds. This avoids an unnecessary consumption of bromine for side-reactions in the reaction of step b).

Both aforementioned embodiments may be combined, i.e. in step a) elemental sulfur in combination with any of the aforementioned gases, which contains a sulfur containing compound, may be added in step a) to the starting mixture.

Concerning the reaction conditions of step b), i.e. concerning the reaction temperature and the reaction pressure, the present invention is not particularly restricted. Good results are in particular obtained, when the reaction in step b) is conducted at a temperature of at least 55°C and preferably at a temperature of 60 to 200°C. Good results are also in particular obtained, when the reaction in step b) is conducted at a pressure of at least 5 barg and preferably at a pressure of 6 to 15 barg.

No catalyst is required for the reaction.

The reaction mixture effluent generated during the reaction of step b) of the process in accordance with the present invention may be, depending on the composition of the starting mixture and depending on the reaction conditions, a single-phase liquid.

However, in most cases the reaction mixture effluent generated during the reaction of step b) will be a gas-/liquid two-phase mixture. In this case, it is suggested in accordance with a further development of the idea of the present invention to separate, as first sub-step of step c), the gas-/liquid two-phase mixture into a gas phase and into a liquid phase, such allowing in an easy manner to separate as gas phase a certain amount of hydrogen bromide from the sulfuric acid generated in the reaction of step b), along with any non-reactive gases which may be present in the reactor feed mixture. Good results are in particular obtained, when the gas-liquid mixture of the reaction mixture effluent is fed in step c) into a vessel and is allowed to phase separate therein so as to separate the reaction mixture effluent into a gaseous portion of the reaction mixture effluent and into a liquid portion of the reaction mixture effluent. Alternatively, the phase separation may be effected by subjecting the gas-liquid mixture of the reaction mixture effluent to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent. Preferably, the aforementioned separation is performed under the temperature and pressure of the reaction mixture effluent as it leaves the reactor, i.e. without active cooling, active heating, active pressurizing or active depressurizing between the reaction and the separation.

Preferably, a portion of the liquid portion of the reaction mixture effluent is recycled into the reactor. This is in particular preferred if at least one sulfur containing compound is hydrogen sulfide. The hydrogen sulfide conversion reaction takes place in the liquid phase and the reaction is irreversible and mass transfer limited. It is therefore advantageous to supply the reaction mixture with a means of liquid recirculation, which helps to ensure that the hydrogen sulfide and the bromine preferably remains in the liquid phase. This also minimizes the amount of non-reacted bromine. If at least one sulfur containing compound is elemental sulfur, the reaction mixture effluent shall be filtered for the unreacted sulfur which shall be recycled into the reactor.

In a further development of the idea of the present invention, an oxidation of a part of S-containing compounds could be stopped at the elemental sulfur and do not proceed up to the sulfuric acid. Such a misfunctioning could be caused by different process upsets or occurred during the startup or shutdown of the operations (different transitory phases). In this case the reaction mixture effluent will also contain some elemental sulfur. The impurities of the elemental sulfur can be removed from the effluent by filtration, decantation or any other known in the prior art techniques and recycled back to the reactor.

In a further development of the idea of the present invention, it is suggested that the liquid portion of the reaction mixture effluent comprises at least 20% by weight and preferably about 50% by weight of hydrogen bromide relative to the water content of the liquid portion of the reaction mixture effluent. Again, if the reaction mixture effluent generated in step b) is a single-phase liquid, the liquid portion of the reaction mixture effluent corresponds to the total reaction mixture effluent.

However, if the reaction mixture effluent generated in step b) is a gas-liquid two-phase mixture, the liquid portion of the reaction mixture effluent corresponds to the liquid phase obtained after the aforementioned separation step. It is particularly preferred that the liquid portion of the reaction mixture effluent comprises the hydrogen bromide and water in concentrations, which are close to or at the hydrogen bromide-water azeotrope. For a binary mixture of water and hydrogen bromide at standard temperature and pressure, the azeotropic composition contains about 47% by weight of hydrogen bromide and about 53% by weight of water. However, in case of the liquid portion of the reaction mixture effluent, and the existing pressure conditions at reactor outlet conditions, the precise contents of water and hydrogen bromide of the azeotropic composition also depends on the concentration of the sulfuric acid. The formation of such a hydrogen bromide-water azeotrope in the liquid portion of the reaction mixture effluent is particularly advantageous, which is among others due to the fact that an over-azeotropic composition could cause too much hydrogen bromide to be dragged by the gas exiting the gas-liquid reaction mixture effluent during the aforementioned separation into the gaseous portion of the reaction mixture effluent and into a liquid portion of the reaction mixture effluent. Moreover, a sub-azeotropic composition means in the best case scenario that there is too much water being circulated in the process, which needs to be removed by evaporation decreasing the efficiency of the process, and means in the worst case scenario that, if no sulfuric acid is added to the liquid portion of the reaction mixture effluent, in the preferred subsequent distillation step set out further below, the composition of the overhead stream would depend on whether the hydrogen bromide-water azeotrope is broken inside the distillation column or not. If the hydrogen bromide-water azeotrope will be broken in the distillation step, hydrogen bromide having a comparable low water content may be removed in the overhead composition. However, if the hydrogen bromide-water azeotrope will be not broken in the distillation step, then water will be contained in high amounts in the overhead composition. On the other hand, assuming that the downstream electrolysis unit can take up to 60% hydrogen bromide aqueous solution on a mass basis, the target concentration in the liquid phase at the reactor outlet may be adjusted accordingly, but the same overall principles as laid out above are still valid. The same principle applies whenever the azeotropic hydrogen bromide composition relative to water is altered as a result of the operating pressure in the reactor.

Apart from the aforementioned content of the hydrogen bromide, it is preferred that the liquid portion of the reaction mixture effluent comprises at least 0.1% by weight of sulfuric acid, 20 to 70% by weight of water and at most 2% by weight of bromine, based on the total weight of the liquid portion of the reaction mixture effluent. More preferably, the liquid portion of the reaction mixture effluent comprises 0.3 to 15% by weight of sulfuric acid, 25 to 65% by weight of water and at most 0.5% by weight of bromine, based on the total weight of the liquid portion of the reaction mixture effluent.

The gaseous portion of the reaction mixture effluent preferably comprises up to 50% by weight of hydrogen bromide based on the total weight of the gaseous portion of the reaction mixture effluent.

The liquid portion of the reaction mixture effluent, i.e. in case that the reaction mixture effluent is a single-phase liquid composition the reaction mixture effluent and in case that the reaction mixture effluent is a gas-/liquid two-phase composition the liquid portion of the reaction mixture effluent after having been separated from the gaseous portion of the reaction mixture effluent, is preferably separated by further separation steps into one or more further hydrogen bromide enriched compositions and into one or more sulfuric acid enriched compositions. For this purpose, it is preferred that step c) comprises, in addition to the aforementioned preferred gas-liquid separation step, at least one distillation step, preferably at least two distillation steps and more preferably three distillation steps.

Before being sent to the first distillation step, it is preferred that the pressure of the reaction mixture effluent or of the liquid portion of the reaction mixture effluent, respectively, is reduced, for instance by sending it through a throttling control valve.

In case that the reaction mixture effluent is a single-phase liquid composition, either the reaction mixture effluent or a mixture of the reaction mixture effluent and a sulfuric acid enriched composition obtained in step c) is subjected as feed to a first distillation step. As set out in further detail below, if the electrolysis of step d) is performed with a gaseous hydrogen bromide enriched composition, it is preferred that a mixture of the reaction mixture effluent and a sulfuric acid enriched composition obtained in step c) is subjected as feed to a first distillation step. This allows to increase the sulfuric acid concentration in the mixture of the reaction mixture effluent and the sulfuric acid enriched composition so that in this mixture the hydrogen bromide-water azeotrope is broken, or at least sufficiently modified so that sufficient hydrogen bromide is ultimately available to undergo electrolysis and therefore be regenerated into the required amount of bromine at reactor inlet conditions. As set out above, thereby during the distillation step a gaseous hydrogen bromide composition having a comparable low water content may be separated as overhead composition from the liquid bottom composition comprising sulfuric acid and water. This is advantageous, because the electrolysis with a gaseous hydrogen bromide rich composition does not tolerate much of water and thereby the overhead composition with the comparable low water content must be merely dried or partially condensed so as to reduce the water content in the gaseous hydrogen bromide rich composition to an amount being acceptable for the electrolysis of step d). However, if the electrolysis of step d) is performed with a liquid (i.e. aqueous) hydrogen bromide composition, the reaction mixture effluent may be used without admixture with a sulfuric acid enriched composition obtained in step c), because a higher water content in the overhead composition as a result of having not broken the hydrogen bromide-water azeotrope during the distillation is not harmful for the electrolysis. However, also in this case it is possible to mix the reaction mixture effluent and a sulfuric acid enriched composition obtained in step c), before using the mixture as feed to the first distillation step. This can be done, for example, to provide a liquid hydrogen bromide solution above azeotropic composition to the electrolysis cell.

In the aforementioned embodiment, the distillation step may be also a settling of the reaction mixture effluent or of the mixture of the reaction mixture effluent and a sulfuric acid enriched composition obtained in step c) in a vessel in order to separate the reaction mixture effluent or the mixture of the reaction mixture effluent and a sulfuric acid enriched composition obtained in step c) into a hydrogen bromide enriched gaseous composition and into a sulfuric acid enriched liquid composition. The settling in the vessel is considered as a distillation step with one theoretical stage.

In case that the reaction mixture effluent is a two-phase gas-/liquid composition, first the two-phase gas-/liquid composition is separated, as further set out above, into a gaseous portion of the reaction mixture effluent and into a liquid portion of the reaction mixture effluent for instance by feeding the reaction mixture effluent into a vessel and allowing it to phase separate therein or by subjecting it to at least one separation step being selected from the group consisting of stripping steps, absorption steps, extraction steps and arbitrary combinations of two or more of the aforementioned separation steps. Afterwards, the liquid portion of the reaction mixture effluent or a mixture of the liquid portion of the reaction mixture effluent and a sulfuric acid enriched composition obtained in step c) is subjected as feed to a first distillation step. As set out above, a mixing of the liquid portion of the reaction mixture effluent and a sulfuric acid enriched composition obtained in step c) before subjecting the mixture to the first distillation step is most preferred, when the electrolysis in step d) is performed with a gaseous hydrogen bromide enriched composition, whereas it is possible to use such a mixture, but also appropriate to use only the liquid portion of the reaction mixture effluent in case that the electrolysis in step d) is performed with a liquid (i.e. aqueous) hydrogen bromide enriched composition. Also in this embodiment, the distillation step may be also a settling of the reaction mixture effluent or of the mixture of the reaction mixture effluent and the sulfuric acid enriched composition obtained in step c) in a vessel.

In most of the aforementioned embodiments, in which a mixture of the reaction mixture effluent (in case of the reaction mixture effluent being a single-phase liquid composition) or of the liquid portion of the reaction mixture effluent (in case of the reaction mixture effluent being a two-phase gas-/liquid composition) and of a sulfuric acid enriched composition obtained in step c) is subjected as feed to a first distillation step, it is preferred on account of the aforementioned reasons that the feed contains so much sulfuric acid that the hydrogen bromide-water azeotrope is broken during the distillation, or at least that the azeotropic composition is altered so that sufficient hydrogen bromide will still be available for electrolysis, as mentioned above. Again, this allows to efficiently separate hydrogen bromide in the gas phase from water in the liquid phase so that in the distillation an overhead composition with a comparable low water concentration of for instance less than 30% by weight is obtained, which may be then further reduced by drying the overhead composition. The precise amount of sulfuric acid being necessary for breaking the hydrogen bromide-water azeotrope depends on the concentration of the sulfuric acid, but at a sulfuric acid concentration of at least 53% by weight relative to the water concentration, the hydrogen bromide-water azeotrope is reliably broken. Therefore, it is particularly preferred that the feed in these embodiments comprises at least 53% by weight of sulfuric acid relative to the water content. For instance, the feed comprises at least 40% by weight, more preferably at least 45% by weight and even more preferably at least 48% by weight of sulfuric acid as well as less than 38% by weight, more preferably at least 30% by weight and even more preferably at least 25% by weight of water based on the total weight of the feed.

The feed is separated in the first distillation step into an overhead composition of a gaseous hydrogen bromide enriched composition containing at most 1,000 ppm of sulfuric acid and into a bottom composition of a liquid sulfuric acid enriched composition containing more than 30% by weight of sulfuric acid and less than 1,000 ppm of hydrogen bromide. Preferably, the hydrogen bromide enriched composition obtained in the first distillation step contains at most 100 ppm, more preferably at most 10 ppm and most preferably at most 1 ppm of sulfuric acid, 5 to 60% by weight of water and 40 to 95% by weight of hydrogen bromide based on the total weight of the hydrogen bromide enriched composition. On the other hand, the sulfuric acid enriched composition obtained in the first distillation step preferably contains more than 50% by weight of sulfuric acid and less than 50% by weight of water based on the total weight of the sulfuric acid enriched composition. More preferably, the sulfuric acid enriched composition obtained in the first distillation step contains 60 to 95% and even more preferably 70 to 80% of sulfuric acid and 5 to 40% and even more preferably 20 to 30% of water based on the total weight of the sulfuric acid enriched composition.

In a further development of the idea of the present invention, it is suggested that the hydrogen bromide enriched composition containing at most 1,000 ppm of sulfuric acid generated in the first distillation step as overhead composition is used for the electrolysis of step d). As set out above, the electrolysis may be performed with a gaseous hydrogen bromide rich composition or with a liquid (i.e. aqueous) hydrogen bromide rich composition.

In case of conducting the electrolysis of step d) with a liquid hydrogen bromide rich composition, it is preferred the hydrogen bromide enriched composition containing at most 1,000 ppm of sulfuric acid generated in the first distillation step as overhead composition is condensed in a condenser and that all or a portion thereof is fed into the electrolysis cell for performing the electrolysis. In this case the liquid hydrogen bromide enriched composition being fed into the electrolysis cell has the same composition as the hydrogen bromide enriched composition containing at most 1,000 ppm of sulfuric acid generated in the first distillation step as overhead composition, i.e. it preferably contains at most 100 ppm, more preferably at most 10 ppm and most preferably at most 1 ppm of sulfuric acid, 5 to 60% by weight of water and 40 to 95% by weight of hydrogen bromide based on the total weight of the condensed hydrogen bromide enriched composition. In this embodiment it is preferred that only a portion of the condensed hydrogen bromide enriched composition is fed into the electrolysis cell, whereas the rest thereof bypasses the electrolysis and is recycled into the starting mixture, i.e. is not sent into the electrolysis cell, but directly or indirectly by mixing it with other process streams into step a). Thereby, the supply of external hydrogen bromide to the starting mixture in step a) is not required, thus further decreasing the total costs of the process and effecting a particular efficient utilization of the hydrogen bromide formed in the reaction of step b). A further advantage of using hydrogen bromide being not subjected to the electrolysis in step d), i.e. by letting bypass a portion of the hydrogen bromide being formed in the reaction of step b) the electrolysis, in the starting mixture is that only a part of the hydrogen bromide being obtained in step b) needs to be sent to electrolysis of step d) for the production of bromine and that for the case of an aqueous hydrogen bromide electrolysis an addition of more water to the electrolysis of step d) is avoided, which both leads to significant energy savings of the process.

In accordance with a particular preferred embodiment of the present invention, the electrolysis of step d) is not performed with a liquid hydrogen bromide rich composition, but with a gaseous hydrogen bromide rich composition. A particular advantage of performing the electrolysis of step d) with a gaseous hydrogen bromide rich composition is that - in comparison to performing the electrolysis of step d) with a liquid hydrogen bromide rich composition - the operational energy demand in the electrolysis cell is reduced by 10 to 15%. In this embodiment of conducting the electrolysis of step d) with a gaseous hydrogen bromide rich composition, it is preferred that at least a portion of the hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight, preferably less than 5% by weight, more preferably less than 2% by weight and most preferably less than 1% by weight of water. At least a portion of the gaseous hydrogen bromide-rich, water depleted composition is subjected to the electrolysis in step d). In addition, the gaseous hydrogen bromide-rich, water depleted composition contains at most 1,000 ppm, preferably at most 100 ppm, more preferably at most 10 ppm and most preferably at most 1 ppm of sulfuric acid. The water removal step may be performed by distillation, pervaporation or partial condensation. In the latter alternative, gaseous hydrogen bromide enriched composition obtained in the first distillation step as overhead composition may be cooled and partially condensed and then separated into the liquid water enriched composition and into the gaseous hydrogen bromide-rich, water depleted composition. While the gaseous portion of hydrogen bromide enriched composition is fed into the electrolysis cell in order to conduct the electrolysis of step d), the liquid portion of hydrogen bromide enriched composition is preferably allowed to bypass the electrolysis and is recycled into the starting mixture, i.e. is not sent into the electrolysis cell, but directly or indirectly by mixing it with other process streams into step a).

In order to further purify and concentrate the sulfuric acid enriched composition obtained as bottom composition of the first distillation step, it is suggested in a further preferred embodiment to subject it to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition. It is further preferred that at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition. The overhead composition obtained in the third distillation step preferably contains at least 99.0% by weight, more preferably at least 99.5% by weight and even more preferably at least 99.9% by weight of water. This pure water may be purged without any further required purification step, thus reliably and efficiently allowing to avoid water accumulation in the continuous process.

As set out further above, it is preferred particularly in case of performing the electrolysis in step d) with a gaseous hydrogen bromide enriched composition that the sulfuric acid and water concentrations in the feed to the first distillation column is adjusted so that the hydrogen bromide-water azeotrope is broken during the distillation. Thereby, it is allowed to efficiently separate hydrogen bromide in the gas phase from water. In order to adjust the sulfuric acid and water concentrations in the feed to the first distillation column appropriately, it is suggested in a further development of the idea of the present invention that a portion of the bottom composition obtained in the second distillation step and/or a portion of the bottom composition obtained in the third distillation step is recycled to and mixed as sulfuric acid enriched composition with the reaction mixture effluent (in case that the reaction mixture effluent is a single-phase liquid composition) or with the liquid portion of the reaction mixture effluent (in case that the reaction mixture effluent is a gas-/liquid two-phase composition), before the so obtained mixture is subjected as feed to the first distillation step.

In accordance with a further preferred embodiment of the present invention, the gaseous portion of the reaction mixture effluent or a mixture of the gaseous portion of the reaction mixture effluent and the overhead composition of the second distillation step is subjected to a scrubbing step with water so as to obtain a gaseous composition containing less than 10 ppm of sum of bromine and hydrogen bromide and an aqueous composition containing 5 to 40% by weight of hydrogen bromide, wherein the aqueous composition is recycled to step a). Thereby, it is achieved that unreacted bromine, which may be contained in the gaseous portion of the reaction mixture effluent and which is subjected to the scrubbing step, is returned to the reactor, which allows to more efficiently utilize the bromine. The aqueous composition may be recycled directly or indirectly by mixing it with other process stream(s) to step a). At least a portion of the water being necessary for the scrubbing step may be a portion or all of the overhead composition obtained in the third distillation step. For instance, a portion of the overhead composition obtained in the third distillation step may be purged, whereas the other portion may be used in the scrubbing step. The remainder of required water for the scrubbing step may be fresh water.

Alternatively, even if less preferred, the gaseous portion of the reaction mixture effluent or a mixture of the gaseous portion of the reaction mixture effluent and the overhead composition of the second distillation step may be directly recycled to step a), i.e. without being subjected to a scrubbing step. In this embodiment, a portion of the overhead composition obtained in the third distillation step may be also directly recycled to step a).

In accordance with a particular preferred embodiment of the present invention, the electrolysis of step d) is performed with a gaseous hydrogen bromide rich composition and comprises the following steps:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide, wherein the feed preferably contains at least 53% by weight relative of sulfuric acid relative to the water concentration,
iii) subjecting at least a portion of the hydrogen bromide enriched composition obtained in the first distillation step as overhead composition to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, and subjecting at least a portion of the gaseous hydrogen bromide-rich, water depleted composition to the electrolysis in step d),
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a) and
vii) optionally, either recycling the gaseous portion of the reaction mixture effluent or a mixture of the gaseous portion of the reaction mixture effluent and the overhead composition of the second distillation step to step a) or subjecting the gaseous portion of the reaction mixture effluent or a mixture of the gaseous portion of the reaction mixture effluent and the overhead composition of the second distillation step to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a).

As alternative to the aforementioned step i), the separation may be achieved in step i) by subjecting the reaction mixture effluent to at least one separation step being selected from the group consisting of stripping steps, absorption steps, extraction steps and arbitrary combinations of two or more of the aforementioned separation steps.

Moreover, the aforementioned process may be modified by replacing the first distillation step ii) by a settling of the reaction mixture effluent or of the mixture of the reaction mixture effluent and a sulfuric acid enriched composition obtained in step c) in a vessel in order to separate the reaction mixture effluent or of the mixture of the reaction mixture effluent and a sulfuric acid enriched composition obtained in step c) into a hydrogen bromide enriched gaseous composition and into a sulfuric acid enriched composition. The settling in the vessel is considered as a distillation step with one theoretical stage.

In addition, it is preferred in the above-mentioned process that the overhead composition consisting mainly of water obtained in the third distillation is recycled to step a) or to the optional scrubber step.

In accordance with an alternative particular preferred embodiment of the present invention, the electrolysis of step d) is performed with a liquid hydrogen bromide rich composition and comprises the comprises the following steps:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting the liquid portion of the reaction mixture effluent or a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide,
iii) condensing at least a portion of the hydrogen bromide enriched composition obtained in the first distillation step as overhead composition and subjecting at least a portion of the condensed portion to the electrolysis in step d),
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) optionally, recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a),
vii) optionally, either recycling the gaseous portion of the reaction mixture effluent to step a) or subjecting the gaseous portion of the reaction mixture effluent to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a), and
viii) optionally, recycling a portion of the condensed portion of the hydrogen bromide enriched composition obtained in step iii), without subjecting it to the electrolysis in step d), to step a).

As alternative to the aforementioned step i), the separation may be achieved in step i) by subjecting the reaction mixture effluent to at least one separation step being selected from the group consisting of stripping steps, absorption steps, extraction steps and arbitrary combinations of two or more of the aforementioned separation steps.

Moreover, the aforementioned process may be modified by replacing the first distillation step ii) by a settling of the reaction mixture effluent or of the mixture of the reaction mixture effluent and a sulfuric acid enriched composition obtained in step c) in a vessel in order to separate the reaction mixture effluent or of the mixture of the reaction mixture effluent and a sulfuric acid enriched composition obtained in step c) into a hydrogen bromide enriched gaseous composition and into a sulfuric acid enriched composition. The settling in the vessel is considered as a distillation step with one theoretical stage.

In addition, it is preferred in the above-mentioned process that the overhead composition consisting mainly of water obtained in the third distillation is recycled to step a) or to the optional scrubber step.

In a further development of the idea of the present invention, it is suggested that the electrolysis is performed in step d) by using an electrolytic cell comprising an anode, a cathode and a membrane sandwiched between the anode and the cathode, wherein an electric field can be applied between the anode and the cathode. The hydrogen bromide enriched composition containing at most 1,000 ppm of sulfuric acid obtained in step c) is fed to the anode, optionally a second composition comprising hydrogen bromide and water is fed to the cathode, and the electrolytic cell is operated to produce hydrogen at the cathode, wherein the bromine containing composition is produced at the anode.

As set out in further detail below, the electrolysis is performed in step d) preferably by using an electrolytic cell comprising a membrane made of a fluoropolymer membrane having a glass transition temperature of at least 110°C.

Furthermore, it is preferred that the electrolysis is performed in step d) by operating the electrolysis cell at an operational temperature of at least 70°C, wherein the operational temperature is below the boiling point of the optional second composition fed to the cathode, and preferably at an operational temperature of 70°C to 122°C.

In addition, it is preferred that the electrolysis is performed in step d) by operating the electrolytic cell at an operational pressure, which increases from the anode to the cathode.

The anode and the cathode regularly comprise electroconductive material, especially metal, coated metal, carbon cloth, graphite felt, carbon fibre composite, carbon loaded polymer or graphite, and are preferably made of carbon fibre composite or coated metal. The membrane may be a sheet or layer which can be used in standard electrolysis cells preferably as a proton exchange membrane. Accordingly, preferably protons can migrate through such a membrane.

As set out above, the electrolysis may be performed with a gaseous hydrogen bromide enriched composition or with a liquid (i.e. aqueous) hydrogen bromide enriched composition. In an aqueous hydrogen bromide containing composition, the hydrogen bromide is dissolved in water, wherein the hydrogen bromide dissolved in water will regularly be dissociated in the water so that the composition will comprises ionic species, such as especially protons, hydronium ions and bromine cations. At the anode, to which the hydrogen bromide is fed, protons are generated during the electrolysis, which then migrate through the membrane to the cathode. According to the present invention, an aqueous hydrogen bromide enriched composition may also be fed to the cathode. This allows to operate the electrolytic cell at a lower operational voltage, which reduces the operational costs. Furthermore, this allows to operate the electrolytic cell at higher temperatures, which lowers the cooling and/or heating requirements of the electrolysis cell, which also reduces the operational costs. Additionally, this allows to operate the electrolytic cell at higher current densities, which reduces the capital expenditures of the electrolysis cell. Moreover, this may reduce the concentration gradient across the membrane and thus reduce or even mitigate undesirable transfer of hydrogen bromide and/or bromine and/or bromine cations from the anode to the cathode through the membrane. Additionally, the presence of hydrogen bromide on the cathode side may allow hydrogen bromide to cross through the membrane from the cathode to the anode side. This results in an increase of the efficiency of the system and allows avoiding any perturbation during electrolysis. Without wishing to be bound to theory, it is assumed that in this embodiment there is actually a hydrogen bromide crossing in reverse direction, i.e., from the cathode to anode. Such a hydrogen bromide crossing in reverse direction is considered to be one of the reasons why the efficiency of the electrolysis of this embodiment can be increased. It is preferred in this embodiment that the hydrogen bromide concentration of the composition fed to the cathode is at least 0.5 mol/kg, more preferably at least 1 mol/kg, still more preferably at least 2 mol/kg, even more preferably at least 3 mol/kg, further preferably at least 4 mol/kg, even further preferably at least 5 mol/kg and most preferably at least 6 mol/kg, with mol/kg referring to the mol of hydrogen bromide per kilogram of the respective composition.

Independently, from whether a hydrogen bromide composition is also led to the cathode of the electrolysis cell or not, it is preferred that the electrolytic cell is operated during the electrolysis of step d) at an operational voltage Uop between more than 0 mV to 1,900 mV and preferably between more than 0 mV to 1,700 mV. Operating the electrolytic cell at such an operational voltage improves the selectivity of the reaction towards hydrogen bromide electrolysis and thereby reduce the operational costs of the electrolysis.

In a further development of the idea of the present invention it is preferred that the electrolysis in step d) is performed by operating the electrolytic cell at an operational temperature of 70°C to 122°C. Operating the electrolytic cell at such an operational temperature can lower the cooling and/or heating requirements. Such higher temperatures increase the proton conductivity of a fluoropolymer-comprising membrane, which allows to operate the electrolysis cell at higher current densities and/or at lower voltages. Higher current densities help to keep the capital expenditures low. It is thus particularly preferred that the operational temperature is maintained at more than 70°C, more preferably at more than 90°C and most preferably at more than 100°C.

It is further preferred that the electrolytic cell is operated during the electrolysis in step d) at an operational pressure, which increases from the anode to the cathode. In other words, there is a pressure gradient which increases from the anode to the cathode, wherein the respective pressures at the anode and the cathode have the same reference point, i.e., are either both absolute pressures, or are both gauge pressures relative to the atmosphere surrounding the electrolytic cell. In such a case, the electrolysis regularly occurs in the gaseous phase, i.e. by feeding gaseous streams to the anode and the cathode. The pressure at the cathode is in such a case higher than the pressure at the anode, preferably higher by at least 0.01 MPa (i.e. the difference between the pressure at the cathode and the pressure at the anode is 0.01 or more MPa), more preferably higher by at least 0.02 MPa, still more preferably higher by at least 0.05 MPa and most preferably higher by at least 0.1 MPa. As an example, when the absolute pressure at the anode is 0.1 MPa, the absolute pressure at the cathode is 0.11 to 0.3 MPa, more preferably 0.12 to 0.25 MPa, still more preferably 0.15 to 0.2 MPa and most preferably 0.2 MPa. However, optional pressures at the cathode which are higher than the pressure at the anode by 1 MPa, by 2 MPa, by 3 MPa, by 4 MPa or even by 5 MPa are also contemplated. With such increasing pressures, or pressure gradients, reduced operational voltages of the electrolytic cell can be achieved, which can lead to reduced operational costs. Additionally, the pressure gradient may allow to obtain the hydrogen at the cathode side at a higher pressure so that no or less compression may be required subsequently for densifying the obtained hydrogen. Additionally, the operation at differential pressure improves the operational parameters.

According to a further preferred embodiment of the present invention, the membrane used for the electrolysis of step d) is a fluoropolymer membrane. Good results are in particular obtained, when the fluoropolymer membrane has a glass transition temperature of at least 110°C, preferably of at least 120°C and more preferably of at least 125°C. Preferably, the fluoropolymer membrane (in a dry state) consists of the fluoropolymer and more preferably consists of the fluoropolymer in a chemically stabilized form. As used herein, a fluoropolymer is a fluorocarbon-based polymer with multiple carbon-fluorine bonds. Such a fluoropolymer is regularly free of silicon atoms. Such a fluoropolymer may further be free of chlorine, bromine and/or iodine atoms. As used herein, the glass transition temperature of the fluoropolymer membrane is determined according to DIN EN ISO 11357-2:2020-08 (half-step-height method). Accordingly, as used herein, the glass transition temperature of the fluoropolymer membrane is determined by a differential scanning calorimetry (DSC) measurement, more specifically from a curve obtained by such a DSC measurement. The glass transition temperature of the fluoropolymer membrane is determined on a sample of the fluoropolymer membrane, more specifically on a sample of the fluoropolymer membrane in the fully hydrated state. According to the present invention, a fluoropolymer membrane in a fully hydrated state is a fluoropolymer membrane, which does not take up any further (deionized) water (deionized H₂O, as described in ASTM D5127-13(2018) standard) at a temperature of 80°C after 24 hours, which is hence a fully hydrated fluoropolymer membrane, or a fluoropolymer membrane saturated with water. Hence, the water uptake of the fluoropolymer membrane has reached its maximum. A fully hydrated fluoropolymer membrane is obtained by immersing the fluoropolymer membrane in deionized water which will result in a weight gain of the fluoropolymer membrane as measurable by a balance. When there is no weight gain over time anymore, the fluoropolymer membrane is in the fully hydrated state. A fluoropolymer membrane in the fully hydrated state is regularly obtained by immersing the fluoropolymer membrane in deionized water having a temperature of 80°C for a time period of 24 hours. As used herein, the glass transition temperature refers to the lowest glass transition temperature of the fluoropolymer. It is known that certain polymers or membranes made of polymers, respectively, e.g., Nafion^{®}-type membranes, may have several glass transition temperatures, in particular two glass transition temperatures. The first glass transition temperature is due to the mobility of the main chain in the polymer matrix, while the second glass transition temperature is due to side chain effects, especially effects associated with strong interactions of functional groups in such side chains like sulfonic acid groups. Once the first glass transition temperature has been reached, the membrane undergoes irreversible changes and can in particular not be used for an electrolysis process anymore. Accordingly, in the context of the present invention, if a material, especially a membrane or membrane sample, exhibits several glass transition temperatures, only the lowest glass transition temperature is relevant for the glass transition temperature definitions provided herein.

A fluoropolymer membrane having a glass transition temperature at least 110°C allows to carry out the electrolysis at higher temperatures and/or at higher pressures because of a more resilient fluoropolymer membrane. Without wishing to be bound to theory, it is assumed that the resilience to hydrogen bromide and, after electrolysis, of hydrogen and bromine at higher temperatures and also at higher pressures is imparted by the fluoropolymer membrane having a glass transition temperature of at least 110°C. Moreover, especially higher temperatures can decrease the resistance of the fluoropolymer membrane which can allow for higher proton conductivities. Higher proton conductivities can allow for higher current densities at lower operational voltages. Higher current densities helps to keep the capital expenditures low, while lower operational voltages lead to lower operational costs.

It is preferred that the fluoropolymer of the membrane comprises -(CF₂-CF₂)- repeat units. Such -(CF₂-CF₂)- repeat units increase the resilience of the fluoropolymer membrane. An increased resilience allows that the hydrogen bromide electrolysis may be performed at higher temperatures and at higher pressures, which allow the operation at higher current densities and/or at lower voltages, thereby making the electrolysis more economical. Moreover, it is preferred that the fluoropolymer of the membrane does not comprise structural entities of the formula -O-CF₂-CF(CF₃)-O-. Such structural entities are present in commercial membranes sold under the tradename Nafion^{®}, but may lead to less rigidity of the membrane, which is thus more prone to degradation at higher temperatures and higher pressures.

It is preferred that the fluoropolymer membrane, more specifically the fluoropolymer comprised by and preferably constituting the membrane, comprises -CF₃ chain ends. Such -CF₃ chain ends may increase the resilience of the fluoropolymer membrane. An increased resilience can allow for HBr electrolysis at higher temperatures and at higher pressures, with may allow operation at higher current densities and/or at lower voltages, thereby making the method according to the present invention more economical.

In accordance with a particular preferred embodiment of the present invention the fluoropolymer of the membrane is a sulfonated fluoropolymer. As used herein, sulfonated means that the fluoropolymer of the fluoropolymer membrane bears -SO₃H groups. Such -SO₃H groups increase the proton conductivity of the fluoropolymer membrane, which allows to operate the electrolysis at higher current densities and/or at lower voltages, thereby making the electrolysis more economical. It is particularly preferred that the sulfonated fluoropolymer comprises -O-(CF₂)ₙ-SO₃H groups, wherein n is an integer selected from 1, 2, 3, 4 and 5, preferably 2. Such -O-(CF₂)ₙ-SO₃H groups help to achieve an increased proton conductivity of the fluoropolymer membrane, while simultaneously increasing the resilience of the fluoropolymer membrane. An advantageous balance between these effects is in particular obtained, when n is selected from 1 to 5 and especially when n is 2. Without wishing to be bound to theory, it is assumed that the comparably short chain length of the -O-(CF₂)ₙ-SO₃H groups increases the glass transition temperature of the fluoropolymer membrane making it more resilient at higher temperatures. As such, the sulfonated fluoropolymer membrane is particularly advantageous from the viewpoint of hydrogen bromide electrolysis at higher temperatures and/or at higher pressures, and hence at higher current densities and/or at lower voltages. As such, the sulfonated fluoropolymer membrane makes the electrolysis particularly economical.

It is preferred that the sulfonated fluoropolymer membrane comprises a hydrolysed copolymer of F₂C=CF₂ and CF₂=CF-O-(CF₂)₂-SO₂F. Such a hydrolysed copolymer can lead to an increased proton conductivity and/or an increased resilience of the fluoropolymer membrane. As such, the sulfonated fluoropolymer membrane is particularly advantageous from the viewpoint of hydrogen bromide electrolysis at higher temperatures and/or at higher pressures, and hence at higher current densities and/or at lower voltages. As such, the sulfonated fluoropolymer membrane makes the electrolysis particularly economical.

It is further preferable that the fluoropolymer membrane has an acid capacity of at least 0.9 meq/g, more preferably between 0.95 and 1.5 meq/g and most preferably between 1.0 and 1.2 meq/g. As used herein, meq/g refers to milli-equivalent per gram, wherein the equivalent is mol -H (i.e., mol of H-acidic cites), preferably mol -SO₃H (i.e., mol of SO₃H-groups). The acid capacity represents the total of active sites or functional groups responsible for proton exchange of the fluoropolymer membrane. Such an acid capacity can increase the proton conductivity and can thereby lead to an increased hydrogen bromide conversion in the electrolysis. An increased hydrogen bromide conversion reduces the need for a separation and possible recirculation of unconverted hydrogen, which can help to maintain low capital expenditures.

It is further preferred that the fluoropolymer membrane (in dry state) has a thickness of 25 to 350 µm, more preferably of 40 to 150 µm, still more preferably of 45 to 130 µm and most preferably of 45 to 55 µm. Such a thickness achieves a good balance between sufficient resilience on the one hand and low capital expenditures on the other hand. At a lower thickness, there is a risk of undesired crossover of hydrogen/bromine through the fluoropolymer membrane and at a higher thickness, an undesirable decrease in proton conductivity may result.

In a further development of the idea of the present invention, it is proposed that the fluoropolymer membrane (in dry state) has a density of at least 1.70 g/cm³, more preferably of at least 1.80 g/cm³, still more preferably of 1.80 to 2.00 g/cm³ and most preferably of 1.90 to 1.95 g/cm³. The density of the fluoropolymer membrane may be determined on a sample thereof according to ASTM D792-20. It is further preferred that the fluoropolymer membrane (in dry state) has a tensile modulus of 100 to 500 MPa, more preferably of 150 to 400 MPa, still more preferably of 200 to 300 MPa and most preferably of 260 to 280 MPa. The tensile modulus of the fluoropolymer membrane may be determined on a sample thereof according to ASTM D638-14. Moreover, it is preferred that the fluoropolymer membrane (in dry state) has a tensile stress at break in machine direction (MD), according to ASTM D882-18, of 10 to 70 MPa, more preferably of 20 to 60 MPa, still more preferably of 30 to 50 MPa and most preferably of 35 to 45 MPa. Also, it is preferred that the fluoropolymer membrane (in dry state) has a tensile stress at break in cross direction (CD), according to ASTM D882-18, of 5 to 60 MPa, more preferably of 10 to 50 MPa, still more preferably of 20 to 40 MPa and most preferably of 25 to 35 MPa. In addition, it is preferred that the fluoropolymer membrane (in dry state) has an elongation at break in machine direction (MD), according to ASTM D882-18, of 100 to 200%, more preferably of 120 to 180%, still more preferably of 140 to 160% and most preferably of 145 to 155%. Likewise, it is preferred that the fluoropolymer membrane (in dry state) has an elongation at break in cross direction (CD), according to ASTM D882-18, of 100 to 350%, more preferably of 120 to 300%, still more preferably of 150 to 250% and most preferably of 190 to 210%. The aforementioned properties increase the resilience of the fluoropolymer membrane. An increased resilience allows that the hydrogen bromide electrolysis may be performed at higher temperatures and at higher pressures, which may allow operation at higher current densities and/or at lower voltages, thereby making the electrolysis of step d) more economical.

In accordance with a second aspect, the present invention relates to a plant for producing hydrogen comprising:
a) a reactor comprising one or more inlet lines and an outlet line for a reaction mixture effluent,
b) a vessel comprising an inlet line being connected with the outlet line for the reaction mixture effluent, wherein the vessel further comprises an outlet line for the gaseous portion of the reaction mixture effluent and an outlet line for the liquid portion of the reaction mixture effluent, wherein the outlet line for the gaseous portion of the reaction mixture effluent is directly or indirectly connected with an inlet line of the reactor,
c) a first distillation column comprising an inlet line being connected with the outlet line for the liquid portion of the reaction mixture effluent, wherein the first distillation column comprises an overhead outlet line for a gaseous hydrogen bromide enriched composition and a bottom outlet line for sulfuric acid enriched composition,
d) an electrolysis cell comprising an anode, a cathode and a membrane sandwiched between the anode and the cathode as well as an inlet line for a hydrogen bromide containing composition, an outlet line for hydrogen and an outlet line for a bromine containing composition, wherein the inlet line of the electrolysis cell is connected with the outlet line for the hydrogen bromide enriched composition of the first distillation column d₁) either directly or d₂) via a condenser being arranged therebetween comprising an inlet line being connected with the overhead outlet line for the gaseous hydrogen bromide enriched composition of the first distillation column and comprising an outlet line being connected with the inlet line for a hydrogen bromide containing composition of the electrolysis cell or d₃) via a vessel being arranged therebetween comprising an inlet line being connected with the overhead outlet line for the gaseous hydrogen bromide enriched composition of the first distillation column, comprising a liquid outlet line and comprising a gas outlet line, with the gas outlet line being connected with the inlet line of the electrolysis cell, and wherein the outlet line for the bromine containing composition of the electrolysis cell is directly or indirectly connected with an inlet line of the reactor,
e) a second distillation column comprising an inlet line being connected with the bottom outlet line for the sulfuric acid enriched composition of the first distillation column, wherein the second distillation column comprises an overhead outlet line for a hydrogen bromide enriched composition and a bottom outlet line for sulfuric acid enriched composition, and
f) optionally, a third distillation column comprising an inlet line being connected with the bottom outlet line for the sulfuric acid enriched composition of the second distillation column, wherein the third distillation column comprises an overhead outlet line for a water enriched composition and a bottom outlet line for sulfuric acid product composition.

The vessel b) may be also a stripping column, an absorption column, an extraction column or a distillation column.

In a further development of the idea of the present invention, it is suggested that the plant further comprises a recycle line, which leads from the bottom outlet line of the second distillation column and/or from the bottom outlet line of the third distillation column into the inlet of the first distillation column.

Furthermore, it is preferred that the plant further comprises a scrubber column, which comprises an inlet line being connected with the outlet line for the gaseous portion of the reaction mixture effluent of the vessel, wherein preferably the overhead outlet line of the second distillation column is connected with the outlet line for the gaseous portion of the reaction mixture effluent of the vessel, wherein the scrubber column further comprises an inlet line for water, an outlet line for a gaseous composition containing less than 10 ppm of sum of bromine and hydrogen bromide and an outlet line for an aqueous composition containing 5 to 40% by weight of hydrogen bromide. Preferably, the inlet line for water of the scrubber column is combined upstream of the scrubber column with a recycle line coming from the overhead outlet line of the third distillation column for water produced as overhead composition in the third distillation column.

Specific embodiments in accordance with the present invention are subsequently described with reference to the appended drawings and by examples.
- Fig. 1: is a schematic view of a plant for producing hydrogen using a gas phase electrolysis in accordance with one embodiment of the present invention.
- Fig. 2: is a schematic view of a plant for producing hydrogen using a gas phase electrolysis in accordance with another embodiment of the present invention.
- Fig. 3: is a schematic view of a plant for producing hydrogen using a liquid phase electrolysis in accordance with one embodiment of the present invention.
- Fig. 4: is a schematic view of a plant for producing hydrogen using a liquid phase electrolysis in accordance with another embodiment of the present invention.
- Fig. 5: is a schematic view of a plant for producing hydrogen using a liquid phase electrolysis in accordance with another embodiment of the present invention.

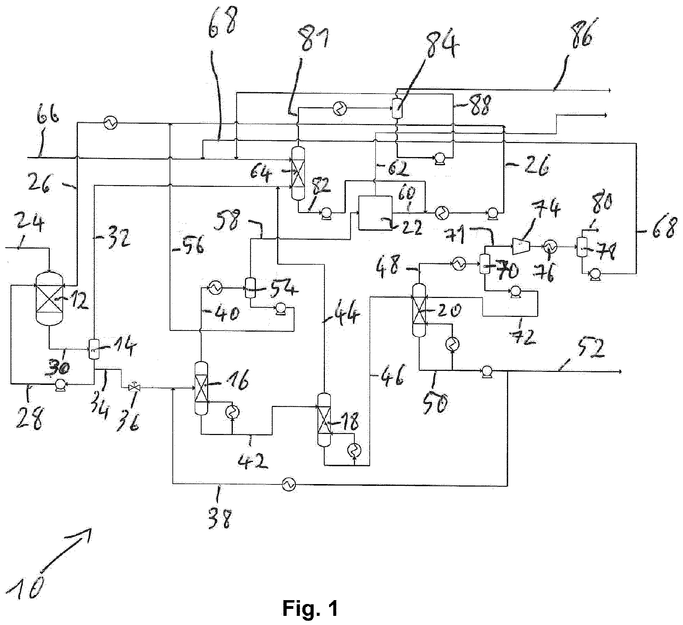

The plant 10 shown in figure 1 using a gas phase electrolysis comprises a reactor 12, a separation vessel 14, three distillation columns, namely a first distillation column 16, a second distillation column 18 and a third distillation column 20, and an electrolysis cell 22. The reactor 12 comprises an inlet line 24 for natural gas, an inlet being connected with a recycle line 26 for a bromine, hydrogen bromide and water containing composition, an inlet being connected with a recycle line 28 for liquid portion of the reaction mixture effluent and an outlet line 30 for reaction mixture effluent. The outlet line 30 for reaction mixture, from which the recycle line 28 splits off, leads into the vessel 14, which is further connected with an outlet line 32 for the gaseous portion of the reaction mixture effluent and with an outlet line 34 for the liquid portion of the reaction mixture effluent. The outlet line 34 for the liquid portion of the reaction mixture effluent leads through a throttle 36, then combines with a recycle line 38 for a sulfuric acid enriched composition and then leads to an inlet of the first distillation column 16. The first distillation column 16 comprises an overhead outlet line 40 and a bottom outlet line 42, which leads into an inlet of the second distillation column 18. Likewise, the second distillation column 18 comprises an overhead outlet line 44 and a bottom outlet line 46, which leads into an inlet of the third distillation column 20. Also, the third distillation column comprises an overhead outlet line 48 and a bottom outlet line 50, which splits into the recycle line 38 for a sulfuric acid enriched composition and into a sulfuric acid product outlet line 52.

The overhead outlet line 40 of the first distillation column 16 leads into a vessel 54, which is further connected with an outlet line 56 for liquid and an outlet line 58 for gas. The outlet line 58 for gas leads into the electrolysis cell 22, which further comprises an outlet line 60 for a bromine containing composition and an outlet line 62 for hydrogen. The plant 10 further comprises a scrubber column 64, which is connected with the outlet line 32 for the gaseous portion of the reaction mixture effluent, which is combined upstream of the scrubber column 64 with the overhead outlet line 44 of the second distillation column 18. The scrubber column 64 further comprises an inlet line 66 for water, which is combined upstream of the scrubber column 64 with a recycle line 68 for water produced as overhead composition in the third distillation column 20. More specifically, the overhead outlet line 48 of the third distillation column 20 leads into a vessel 70, from which a liquid recycle line 72 leads back into the third distillation column 20 and a gas line 71 leads into a compressor 74, from there to a heat exchanger 76 and from there to a further vessel 78. The vessel 78 is connected with a gas outlet line 80 and with the recycle line 68 for liquid water. The scrubber column 64 is further connected with an outlet line 81 for a gaseous composition containing less than 10 ppm of sum of bromine and hydrogen bromide and an outlet line 82 for an aqueous composition containing 5 to 40% by weight of hydrogen bromide. While the outlet line 81 leads to a vessel 84 comprising a gas outlet line 86 and a recycle line 88 leading into the water inlet line 66 of the scrubber column 64, the outlet line 82 of the scrubber column 64 combines with the outlet line 60 for the bromine containing composition to the recycle line 26 leading into the reactor 12.

During the operation of the plant 10, natural gas including hydrogen sulfide as sulfur containing compound is fed via inlet line 24 and a composition including bromine, hydrogen bromide and water is fed via the recycle line 26 into the reactor 12 so as to form therein the starting mixture, which is reacted in the reactor 12 to a reaction mixture effluent comprising sulfuric acid, hydrogen bromide, unreacted bromine and water as well as methane, ethane and carbon dioxide deriving from the natural gas. The reaction mixture effluent is withdrawn from the reactor 12 via the outlet line 30, wherein a portion thereof is recycled via line 28 into the reactor 12 and the remaining portion is fed into the separation vessel 14. The reaction mixture effluent separates in the separation vessel 14 into a gaseous portion of the reaction mixture effluent and into a liquid portion of the reaction mixture effluent. While the gaseous portion of the reaction mixture effluent exits the separation vessel 14 via the outlet line 32, the liquid portion of the reaction mixture effluent exits the separation vessel 14 via the outlet line 34. The liquid portion of the reaction mixture effluent combines, before entering the first distillation column 16, with the sulfuric acid enriched composition deriving from the bottom outlet line 50 of the third distillation column 20 and led to the line 34 through the recycle line 38 so as to increase the sulfuric acid concentration in the liquid portion of the reaction mixture effluent sufficiently high to break the hydrogen bromide-water azeotrope therein, thus allowing to efficiently separate in the first distillation column 16 hydrogen bromide in the gas phase and water in the liquid phase. The water and sulfuric acid enriched bottom composition produced in the first distillation column 16 is withdrawn from the first distillation column 16 via the bottom outlet line 42 and is introduced into the second distillation column 18, in which the water and sulfuric acid enriched bottom composition of the first distillation column 16 is separated into a water enriched overhead composition and into a sulfuric acid enriched bottom composition. The so produced sulfuric acid enriched bottom composition is withdrawn from the second distillation column 20 via the bottom outlet line 46 and is then fed into the third distillation column 20 and is separated therein into a pure water overhead composition comprising more than 99.9% by weight of water and into a concentrated sulfuric acid bottom composition comprising at least 95% by weight of sulfuric acid. The so produced concentrated sulfuric acid bottom composition is withdrawn from the third distillation column 20 via the outlet line 50. While a portion of the concentrated sulfuric acid composition is recycled via the recycle line 38 into the liquid portion of the reaction mixture effluent led through line 34, the remaining portion of the concentrated sulfuric acid composition is withdrawn from the plant 12 via the sulfuric acid product outlet line 52.

The hydrogen bromide enriched composition obtained as overhead composition in the first distillation column 16 is fed via the overhead outlet line 40 of the first distillation column 16 into the vessel 54, in which the hydrogen bromide enriched composition is partially condensed and thus separated into a liquid water enriched composition being withdrawn from the vessel via the liquid outlet line 56 and into a gaseous hydrogen bromide-rich, water depleted composition comprising less than 1% by weight of water being withdrawn from the vessel via the outlet line 58. While the gaseous portion of hydrogen bromide enriched composition is fed via the line 58 into the electrolysis cell 22 in order to conduct the electrolysis of step d) therein, the liquid portion of hydrogen bromide enriched composition is not subjected to any electrolysis and thus bypasses the electrolysis cell 22, but is led into the recycle line 26. Optionally, a portion of the liquid water enriched composition leaving vessel 54 is fed back to the top of the distillation column 16 as liquid reflux. The hydrogen bromide enriched composition is electrolysed in the electrolysis cell 22 into hydrogen and a bromine containing composition. While the hydrogen is withdrawn from the electrolysis cell 22 via the outlet line 62 and removed as product from the plant, the bromine containing composition is withdrawn from the electrolysis cell 22 via the outlet line 60 and is combined with the aqueous composition obtained in the scrubber column 64 as bottom composition. The so obtained combined stream is led via the recycle line 26, into which the liquid portion of the hydrogen bromide enriched composition obtained in vessel 54, which bypasses the electrolysis cell 22, is led through line 56, into the reactor 12.

The gaseous portion of the reaction mixture effluent exiting the separation vessel 14 via the outlet line 32 is subjected in the scrubber column 64 to a scrubbing step with water so as to obtain a gaseous composition containing less than 10 ppm of sum of bromine and hydrogen bromide, which is withdrawn from the scrubber column 64 via the gas outlet line 81, as well as an aqueous composition containing 5 to 40% by weight of hydrogen bromide, which is withdrawn from the scrubber column 64 via the liquid outlet line 82 and which is then combined with the bromine containing composition exiting the electrolysis cell via the outlet line 60.

The overhead composition of the third distillation column 20, which is withdrawn from the third distillation column 20 via the outlet line 48, is degassed in the vessel 78 and the so obtained degassed pure water is led through line 68 and combined with the water inlet line 66 leading to the scrubber column 64.

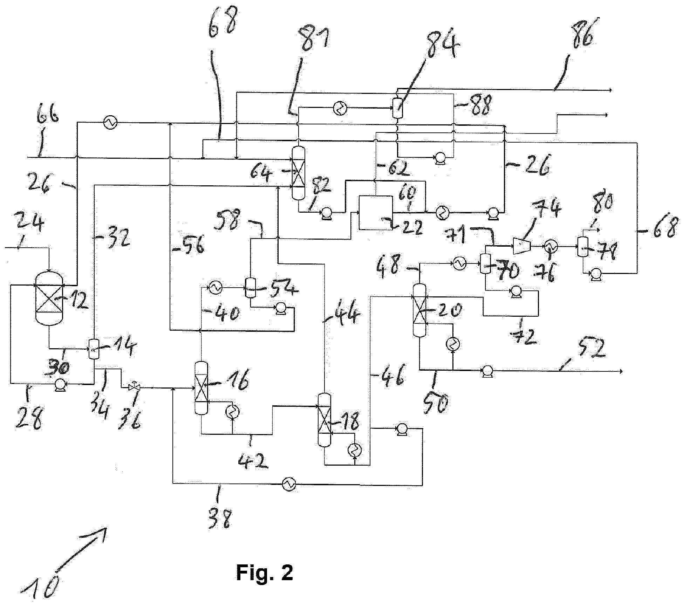

The plant 10 shown in figure 2 is identical to that shown in figure 1 except that the liquid portion of the reaction mixture effluent being withdrawn from the vessel 14 via outlet line 34 is not combined with the sulfuric acid enriched composition being obtained as bottom composition in the third distillation column 20, but is combined with the sulfuric acid enriched composition being obtained as bottom composition in the second distillation column 18 and which is led into line 34 via the recycle line 38.

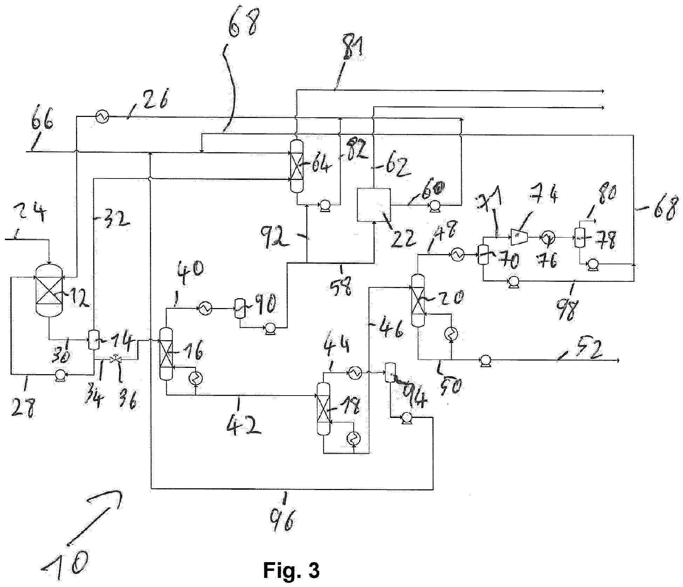

The plant 10 shown in figure 3 uses in difference to the plant 10 shown in figures 1 and 2 a liquid phase electrolysis. The plant 10 shown in figure 3 differs from that shown in figure 1 in that the overhead outlet line 40 of the first distillation column 40 does not lead into a vessel 54 and is not separated therein into a liquid water enriched composition and into a gaseous hydrogen bromide-rich, water depleted composition. On the contrary, the overhead outlet line 40 of the first distillation column 40 leads into a condenser 90, in which the overhead composition obtained in the first distillation column 16, which comprises up to about 50% by weight of hydrogen bromide and up to 50% by weight of water, is condensed to a liquid. A portion of the so obtained liquid is then fed via line 58 into the electrolysis cell 22, whereas the remaining portion of the liquid is led via the bypass line 92 into the outlet line for the aqueous composition of the scrubber column 64. In a further difference to the plant 10 shown in figure 1, the overhead outlet line 44 of the second distillation column 18 of the plant 10 shown in figure 3 is not combined with line 32 for the gaseous portion of the reaction mixture effluent. On the contrary, the overhead outlet line 44 of the second distillation column 18 of the plant 10 shown in figure 3 leads into a condenser 94, in which the water enriched overhead composition obtained in the second distillation column 18 is condensed to liquid, which is then led via liquid line 96 into the water inlet line 66 of the scrubber column 64. In still a further difference to the plant 10 shown in figure 1, the liquid portion obtained in the vessel 70 from the overhead composition being withdrawn from the third distillation column 20 via line 48 is not recycled via a liquid recycle line 72 into the third distillation column. On the contrary, the liquid portion obtained in the vessel 70 from the overhead composition of the third distillation column 20 is led via liquid line 98 and is combined with the liquid portion of water being obtained in vessel 78, wherein the so obtained pure water mixture is led via the recycle line 68 into the water inlet line 66 of the scrubber column 64. In yet a further difference to the plant 10 shown in figure 1, the gaseous composition obtained in the scrubber column 64 is not led to a vessel 84. On the contrary, the gaseous composition obtained and leaving the scrubber column 64 via line 81 is withdrawn via line 81 from the plant 10. In a last difference to the plant 10 shown in figure 1, the plant 10 shown in figure 3 does not comprise any recycle line 38 for recycling a sulfuric acid enriched composition and combining it with the liquid portion of the reaction mixture effluent being withdrawn from the vessel 14 via line 34.

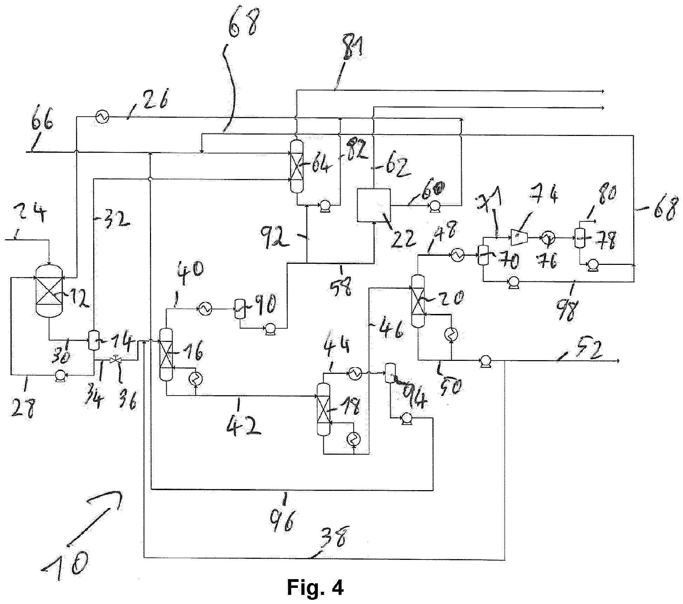

The plant 10 shown in figure 4 is identical to that shown in figure 3 except that the plant 12 comprises a recycle line 38 for recycling a portion of the sulfuric acid enriched bottom composition obtained in the third distillation column 20 and combining it with the liquid portion of the reaction mixture effluent being withdrawn from the vessel 14 via line 34, before the so obtained mixture is led into the first distillation column 16.

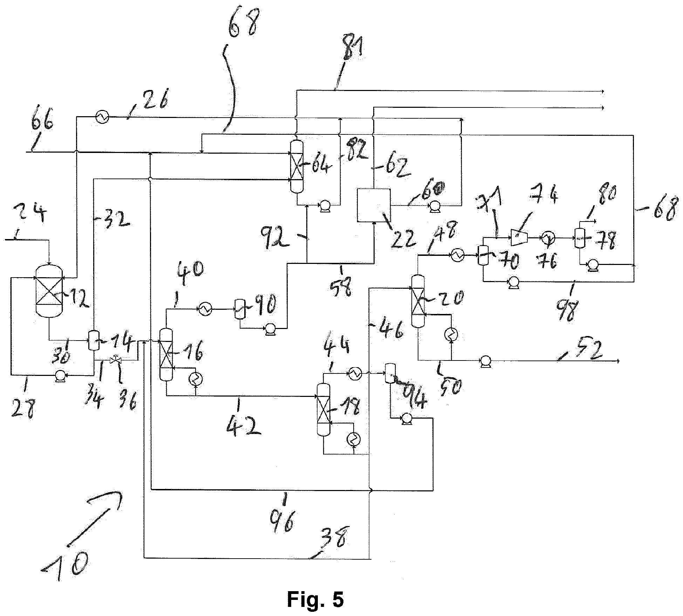

The plant 10 shown in figure 5 is identical to that shown in figure 3 except that the plant 12 comprises a recycle line 38 for recycling a portion of the sulfuric acid enriched bottom composition obtained in the second distillation column 18 and combining it with the liquid portion of the reaction mixture effluent being withdrawn from the vessel 14 via line 34, before the so obtained mixture is led into the first distillation column 16.

### Reference Numeral List

- 10: Plant
- 12: Reactor
- 14: Separation vessel
- 16: First distillation column
- 18: Second distillation column
- 20: Third distillation column
- 22: Electrolysis cell
- 24: Inlet line for natural gas
- 26: Recycle line for a bromine, hydrogen bromide and water containing composition
- 28: Recycle line for liquid portion of the reaction mixture effluent
- 30: Outlet line reaction mixture effluent
- 32: Outlet line for the gaseous portion of the reaction mixture effluent
- 34: Outlet line for the liquid portion of the reaction mixture effluent
- 36: Throttle
- 38: Recycle line for a sulfuric acid enriched composition
- 40: Overhead outlet line of the first distillation column
- 42: Bottom outlet line of the first distillation column
- 44: Overhead outlet line of the second distillation column
- 46: Bottom outlet line of the second distillation column
- 48: Overhead outlet line of the third distillation column
- 50: Bottom outlet line of the third distillation column
- 52: Outlet line for sulfuric acid product
- 54: Vessel
- 56: Liquid outlet line
- 58: Outlet line / line leading into electrolysis cell
- 60: Outlet line for a bromine containing composition
- 62: Outlet line for hydrogen
- 64: Scrubber column
- 66: Inlet line for water
- 68: Recycle line for water
- 70: Vessel
- 71: Gas line
- 72: Liquid recycle line
- 74: Compressor
- 76: Heat exchanger
- 78: Vessel
- 80: Gas outlet line
- 81: Outlet line for a gaseous composition
- 82: Outlet line for an aqueous composition
- 84: Vessel
- 86: Gas outlet line
- 88: Recycle line
- 90: Condenser
- 92: Bypass line
- 94: Condenser
- 96: Liquid line
- 98: Liquid line

## Claims

1. A process for producing hydrogen comprising the following steps:
a) providing a starting mixture containing bromine, water and a sulfur containing compound,
b) reacting the starting mixture provided in step a) so as to produce a reaction mixture effluent comprising sulfuric acid and hydrogen bromide,
c) separating the reaction mixture effluent obtained in step b) into one or more hydrogen bromide enriched compositions and into one or more sulfuric acid enriched compositions, wherein at least one hydrogen bromide enriched composition contains at most 1,000 ppm of sulfuric acid,
d) subjecting at least a portion of the at least one hydrogen bromide enriched composition containing at most 1,000 ppm of sulfuric acid obtained in step c) to an electrolysis so as to obtain hydrogen and a bromine containing composition, and
e) recycling at least a portion of the bromine containing composition obtained in step d) back to step a).

2. The process in accordance with claim 1, wherein the sulfur containing compound is selected from the group consisting of sulfur, sulfides, disulfides, thiophenes, thiols and arbitrary combinations of two or more of the aforementioned compounds and is more preferably selected from the group consisting of hydrogen sulfide, sulfur, sulfur dioxide, carbon disulfide, carbonyl sulfide, methanethiol and arbitrary combinations of two or more of the aforementioned compounds.

3. The process in accordance with claim 1 or 2, wherein the starting mixture provided in step a) further contains hydrogen bromide, and wherein the process further comprises as step f) a recycling of at least a portion of hydrogen bromide contained in one of the one or more hydrogen bromide enriched compositions produced in step c) to step a), wherein the recycled hydrogen bromide has not been subjected to electrolysis.

4. The process in accordance with any of the preceding claims, wherein the starting mixture comprises at least 5% by weight and preferably 11 to 46% by weight of hydrogen bromide, at least 1% by weight and preferably 2 to 35% by weight of bromine and 40 to 75% by weight of water based on the total weight of water, bromine and hydrogen bromide in the liquid phase of the starting mixture, if the starting mixture is at the reaction temperature and reaction pressure a gas-liquid mixture, and wherein the starting mixture comprises at least 5% by weight and preferably 11 to 46% by weight of hydrogen bromide, at least 1% by weight and preferably 2 to 35% by weight of bromine and 30 to 75% by weight of water based on the total weight of the starting mixture, if the starting mixture is at the reaction temperature and reaction pressure a liquid.

5. The process in accordance with any of the preceding claims, wherein the reaction in step b) is conducted at a temperature of at least 55°C and preferably at a temperature of 60 to 200°C, and wherein the reaction in step b) is conducted at a pressure of at least 5 barg and preferably at a pressure of 6 to 15 barg.

6. The process in accordance with any of the preceding claims, wherein the reaction mixture effluent is a gas-liquid mixture and is fed in step c) into a vessel and is allowed to phase separate therein or is subjected to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent, wherein the liquid portion of the reaction mixture effluent comprises at least 20% by weight and preferably 25 to 50% by weight of hydrogen bromide relative to the water content of the liquid portion of the reaction mixture effluent, and wherein the liquid portion of the reaction mixture effluent comprises at least 0.1% by weight and preferably 0.3 to 15% by weight of sulfuric acid, 20 to 70% by weight and preferably 25 to 65% by weight of water and at most 2% by weight and preferably at most 0.5% by weight of bromine, based on the total weight of the liquid portion of the reaction mixture effluent.

7. The process in accordance with any of the preceding claims, wherein step c) comprises at least one distillation step, preferably at least two distillation steps and more preferably three distillation steps, wherein the reaction mixture effluent is fed in step c) into a vessel and is allowed to phase separate therein or is subjected to at least one separation step being selected from the group consisting of stripping steps, absorption steps, extraction steps and arbitrary combinations of two or more of the aforementioned separation steps, so as to separate the reaction mixture effluent into a gaseous portion of the reaction mixture effluent and into a liquid portion of the reaction mixture effluent, whereafter the liquid portion of the reaction mixture effluent or a mixture of the liquid portion of the reaction mixture effluent and a sulfuric acid enriched composition obtained in step c) is subjected as feed to a first distillation step, wherein the feed is preferably separated in the first distillation step into a gaseous overhead composition of a hydrogen bromide enriched composition containing at most 1,000 ppm of sulfuric acid and into a liquid bottom composition of a sulfuric acid enriched composition containing more than 30% by weight of sulfuric acid and less than 1,000 ppm of hydrogen bromide.

8. The process in accordance with claim 7, wherein at least a portion of the gaseous hydrogen bromide enriched composition obtained in the first distillation step as overhead composition is condensed and subjected to the electrolysis in step d), or wherein at least a portion of the hydrogen bromide enriched composition obtained in the first distillation step as overhead composition is subjected to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, wherein at least a portion of the gaseous hydrogen bromide-rich, water depleted composition is subjected to the electrolysis in step d).

9. The process in accordance with any of claims 7 or 8, wherein the sulfuric acid enriched composition obtained as liquid bottom composition of the first distillation step is subjected to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein at least a portion of the bottom composition of the second distillation step is preferably subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition.

10. The process in accordance with claim 9, wherein a portion of the bottom composition obtained in the second distillation step and/or a portion of the bottom composition obtained in the third distillation step is recycled to and mixed as sulfuric acid enriched composition with the reaction mixture effluent or with the liquid portion of the reaction mixture effluent, before the so obtained mixture is subjected as feed to the first distillation step.

11. The process in accordance with any of the preceding claims, wherein the gaseous portion of the reaction mixture effluent or a mixture of the gaseous portion of the reaction mixture effluent and the overhead composition of the second distillation step is subjected to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a).

12. The process in accordance with any of the preceding claims, which comprises:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide, wherein the feed preferably contains at least 53% by weight relative of sulfuric acid relative to the water concentration,
iii) subjecting at least a portion of the hydrogen bromide enriched composition obtained in the first distillation step as overhead composition to a water removal step so as to separate the hydrogen bromide enriched composition into a water enriched composition and into a gaseous hydrogen bromide-rich, water depleted composition comprising 90 to 99% by weight of hydrogen bromide and less than 10% by weight and preferably less than 1% by weight of water, and subjecting at least a portion of the gaseous hydrogen bromide-rich, water depleted composition to the electrolysis in step d),
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a) and
vii) optionally, either recycling the gaseous portion of the reaction mixture effluent or a mixture of the gaseous portion of the reaction mixture effluent and the overhead composition of the second distillation step to step a) or subjecting the gaseous portion of the reaction mixture effluent or a mixture of the gaseous portion of the reaction mixture effluent and the overhead composition of the second distillation step to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a).

13. The process in accordance with any of claims 1 to 12, which comprises:
i) feeding the reaction mixture effluent in step c) into a vessel and allowing it to phase separate therein so as to separate the reaction mixture effluent into a gaseous portion of the reaction mixture effluent and into a liquid portion of the reaction mixture effluent,
ii) subjecting the liquid portion of the reaction mixture effluent or a mixture of the liquid portion of the reaction mixture effluent and a sulfuric acid enriched composition obtained in step c) as feed to a first distillation step so as to separate the feed into an overhead composition of a hydrogen bromide enriched composition containing at most 1,000 ppm of sulfuric acid and into a bottom composition of a sulfuric acid enriched composition containing more than 30% by weight of sulfuric acid and less than 1,000 ppm of hydrogen bromide,
iii) condensing at least a portion of the hydrogen bromide enriched composition obtained in the first distillation step as overhead composition and subjecting at least a portion of the condensed portion to the electrolysis in step d),
iv) subjecting the sulfuric acid enriched composition obtained as bottom composition of the first distillation step to a second distillation step so as to produce an overhead composition and a bottom composition containing 60 to 95% by weight and preferably 70 to 80% by weight of sulfuric acid and 5 to 40% by weight and preferably 20 to 30% by weight of water based on the total weight of the bottom composition, wherein preferably at least a portion of the bottom composition of the second distillation step is subjected to a third distillation step so as to produce an overhead composition and a bottom composition containing at least 90% by weight and preferably at least 94% by weight of sulfuric acid and less than 10% by weight and preferably less than 6% by weight of water based on the total weight of the bottom composition,
v) optionally, recycling and mixing a portion of the bottom composition obtained in the second distillation step and/or a portion of the bottom composition obtained in the third distillation step as sulfuric acid enriched composition with the liquid portion of the reaction mixture effluent so as to produce the mixture of the liquid portion of the reaction mixture effluent and a sulfuric acid enriched composition used in step ii),
vi) recycling at least a portion of the bromine containing composition obtained in the electrolysis to step a),
vii) optionally, either recycling the gaseous portion of the reaction mixture effluent to step a) or subjecting the gaseous portion of the reaction mixture effluent to a scrubbing step with water so as to obtain a gaseous composition containing less than 10 ppm of sum of bromine and hydrogen bromide and a liquid aqueous composition containing 5 to 40% by weight of hydrogen bromide, wherein the liquid aqueous composition is recycled to step a), and
viii) optionally, recycling a portion of the condensed portion of the hydrogen bromide enriched composition obtained in step iii), without subjecting it to the electrolysis in step d), to step a).

14. The process in accordance with any of the preceding claims, wherein the electrolysis is performed in step d) by using an electrolytic cell comprising an anode, a cathode and a membrane sandwiched between the anode and the cathode, wherein the hydrogen bromide enriched composition containing at most 1,000 ppm of sulfuric acid obtained in step c) is fed to the anode, optionally a second composition comprising hydrogen bromide and water is fed to the cathode, and the electrolytic cell is operated to produce hydrogen at the cathode, wherein the bromine containing composition is produced at the anode, wherein the membrane is made of a fluoropolymer having a glass transition temperature of at least 110°C, and wherein the electrolysis cell is operated at an operational temperature of at least 70°C and preferably at an operational temperature of 70°C to 122°C.

15. A plant for producing hydrogen comprising:
a) a reactor comprising one or more inlet lines and an outlet line for a reaction mixture effluent,
b) a vessel comprising an inlet line being connected with the outlet line for the reaction mixture effluent, wherein the vessel further comprises an outlet line for the gaseous portion of the reaction mixture effluent and an outlet line for the liquid portion of the reaction mixture effluent, wherein the outlet line for the gaseous portion of the reaction mixture effluent is directly or indirectly connected with an inlet line of the reactor,
c) a first distillation column comprising an inlet line being connected with the outlet line for the liquid portion of the reaction mixture effluent, wherein the first distillation column comprises an overhead outlet line for a gaseous hydrogen bromide enriched composition and a bottom outlet line for sulfuric acid enriched composition,
d) an electrolysis cell comprising an anode, a cathode and a membrane sandwiched between the anode and the cathode as well as an inlet line for a hydrogen bromide containing composition, an outlet line for hydrogen and an outlet line for a bromine containing composition, wherein the inlet line of the electrolysis cell is connected with the outlet line for the hydrogen bromide enriched composition of the first distillation column d₁) either directly or d₂) via a condenser being arranged therebetween comprising an inlet line being connected with the overhead outlet line for the gaseous hydrogen bromide enriched composition of the first distillation column and comprising an outlet line being connected with the inlet line for a hydrogen bromide containing composition of the electrolysis cell or d₃) via a vessel being arranged therebetween comprising an inlet line being connected with the overhead outlet line for the gaseous hydrogen bromide enriched composition of the first distillation column, comprising a liquid outlet line and comprising a gas outlet line, with the gas outlet line being connected with the inlet line of the electrolysis cell, and wherein the outlet line for the bromine containing composition of the electrolysis cell is directly or indirectly connected with an inlet line of the reactor,
e) a second distillation column comprising an inlet line being connected with the bottom outlet line for the sulfuric acid enriched composition of the first distillation column, wherein the second distillation column comprises an overhead outlet line for a hydrogen bromide enriched composition and a bottom outlet line for sulfuric acid enriched composition, and
f) optionally, a third distillation column comprising an inlet line being connected with the bottom outlet line for the sulfuric acid enriched composition of the second distillation column, wherein the third distillation column comprises an overhead outlet line for a water enriched composition and a bottom outlet line for sulfuric acid product composition.
